Europäisches Patentamt

European Patent Office

Office européen des brevets

(19)

(11) Publication number: **0 557 997 A2**

# EUROPEAN PATENT APPLICATION

(21) Application number: **93102966.4**

(22) Date of filing: **25.02.93**

(51) Int. Cl.5: **G06F 15/80**

(30) Priority: **28.02.92 JP 42830/92**

(43) Date of publication of application:
**01.09.93 Bulletin 93/35**

(84) Designated Contracting States:
**DE FR GB**

(71) Applicant: **HITACHI, LTD.**
**6, Kanda Surugadai 4-chome**
**Chiyoda-ku, Tokyo 100(JP)**

(72) Inventor: **Asai, Mitsuo**
**Hitachi Tennoue Shataku A-7, 217**
**Higashikoigakubo-1-chome,**
**Kokubunji-shi(JP)**
Inventor: **Shibata, Katsunari**
**Daiichi Kurashitaso 210,32-8, Eifuku-l-chome**
**Suginami-ku, Tokyo(JP)**

Inventor: **Sato, Yuji**
**Mezon Dorudu Kunitachi 202,**
**5-45, Nishimachi-1-chome, Kokubunji-shi(JP)**
Inventor: **Yamada, Minoru**
**4-12-18, Misugidai**
**Hanno-shi(JP)**
Inventor: **Sakaguchi, Takahiro**
**5-7, Mihoricho-5-chome**
**Akishima-shi(JP)**
Inventor: **Hashimoto, Masashi**
**5-13, Nakahara-3-chome**
**Mitaka-shi(JP)**

(74) Representative: **Patentanwälte Beetz - Timpe -**
**Siegfried - Schmitt-Fumian- Mayr**
**Steinsdorfstrasse 10**
**D-80538 München (DE)**

(54) Information processing apparatus and information processing system.

(57) An information processing apparatus is made up of a plurality of modules (1, 2, 3, 4, 125, 126, 127, 128). One module is made up of a functional block for rapidly operating a scalar product and a control unit for controlling the functional block. The module operates itself in an SIMD manner. The plurality of modules are connected so as to communicate a signal with each other. The plurality of modules operate in an MIMD manner. Inside of one module, the strong fault tolerant parts such as a neuron processor (204) and a memory (202) are integrated on an integrated circuit substrate. The weak fault tolerant parts such as a control unit is mounted on the integrated circuit substrate by means of a silicon on silicon technique.

FIG.1

## BACKGROUND OF THE INVENTION

The present invention relates to an information processing apparatus and system, and more particularly to the information processing system which may be applied to a broad range of fields such as a neuron computer, a parallel computer, a physical simulation system, a workstation, a control system for a robot.

In the conventional implementation of a parallel computer, a connection machine may be referred to as a representative fine grain approach. The connection machine provides processor elements, each of which element is made up of a one-bit operator and a 4K-bit memory so as to realize the most fine grain for realizing the most fine grain. The overall system is controlled in a single instruction and multiple data stream (SIMD) system, that is, by a single instruction. One chip (integrated circuit) provides 16 processor elements, which are connected to each other in a binary 12-cube network. As such, the total number of the processor elements is 65536 ($2^{16}$). In actual, the connection machine gives a quite high performance if it is used for artificial intelligence or an image processor. Further, it has been reported that the connection machine provides a capability of simulating a neural network. In general, however, the most of the neural models iteratively perform multiplications and additions about multi-bit data. Hence, the most fine grain of the neural model corresponds to the one-bit operator. This leads to the appearance of an overhead when operating multi-bit data. Due to the drawback, the connection machine does not provide so high a high-speed operating performance to the general neural model.

As a method for providing a high-speed operating and learning capability to the neural network, the inventors of the present applicant have proposed "Design of a high-speed learning neuron WSI system" in the proceedings CPSY90-71 and ICD90-127 of IEEE, October 25, 1990 and the technique in the JP-A-3-206549. In these systems, a plurality of neuron processors are connected to each other through a bus in a manner that those neuron processors may sequentially broadcast an output of each neuron processor through the bus for the purpose of implementing neural communication. The general neural model has a quite great number of connections between the neurons. Hence, such a simple connecting method enables a high-speed operation. Further, the general neural model needs a small amount of hardware for doing communication and brings about a small overhead in light of time. This makes it possible to compact the neural model. By focusing on the high fault tolerability of the neural network to the defects appearing thereon, the neural model may be mounted on a plurality of large integrated circuits, that is, Wafer Scale Integrations (WSI) for making the overall system compact. However, the control circuit is not mounted on a large integrated circuit, because it is less fault tolerable.

In turn, a method for efficiently doing broadcasting communication if a coarse connection is provided among the neurons has been proposed in USP4,796,199. This method is arranged so that the neuron processors are grouped into hierarchical stages of a family, a group and a connection. In each hierarchical stage, the broadcasting communication is executed. That is, the neural network is divided into several modules each for efficiently executing a learning operation. In this case, the traffic between the modules is smaller than the traffic in the module. As such, the neural network enables to perform high-speed operating and learning. However, this US specification does not disclose any control method for the neural network grouped into modules.

On the other hand, as an MIMD (Multiple Instruction Multiple Data Stream) system, an N-cube 2 can be referred. The N-cube 2 provides a plurality of processor elements connected through hyper cube topology. Each processor element operates in an individual manner. The N-cube 2 implements the maximum number 8192 ($2^{13}$) of the processor elements contained therein and needs only 4 $m^2$ as its installed area.

## SUMMARY OF THE INVENTION

It is an object of the present invention to provide an information processing apparatus having a parallel operating capability which has a lot of functional blocks for operations but is reduced in size.

It is a further object of the present invention to provide an effective distributing processing and logical operation in building an information processing system which is arranged to have a plurality of information processing apparatuses each having a parallel operating capability and a lot of functional blocks for operation.

It is another object of the present invention to provide an information processing apparatus and system which is suitable to a high-speed computation of a neural model.

An SIMD machine enables to operate in a somewhat different manner in response to a conditional instruction. If the conditional instruction is branched into variable ways, the machine can operate in a more variable manner. However, it needs to make an instruction decoder of each processor more complicated. The most complicated form of the SIMD machine corresponds to the MIMD machine.

In a case of simulating the modules of the neural network on the SIMD machine, it is impossible to execute the module models in parallel if those modules have greatly different models from each other. Considering that the MIMD machine is used, though the neuron model is computed in each module, the corresponding processor elements hold the same instruction set and the control circuits for those processor elements serve to decode the same instruction. As a result, the neural network serves to operate in a very redundant manner if viewed from the external. Further, the MIMD machine needs the larger amount of hardware for one processor element than the SIMD machine. The MIMD machine, therefore, has a fewer processors per a constant area than the SIMD machine.

Moreover, focusing on strong fault tolerance, a plurality of neuron processors for computing a neuron model are allowed to be mounted on one large integrated circuit. However, the control circuits are less fault tolerable. Hence, if those control circuits are mounted on the same large integrated circuit, the overall yield is disadvantageously made lower. As such, the operating unit and the control unit are required to be mounted on the respective integrated circuits.

According to the invention, the functional blocks for executing an operation (for rapidly operating a scalar product) and the control system for controlling the functional blocks are arranged as one module. The number of the functional blocks is about $10^4$. Inside of the module, the SIMD system is used for the operation. A plurality of modules (about 100) are allowed to be connected for executing communication. Those plurality of modules are operated in the MIMD systems having respective instruction sets.

The neuron processors and the memories are integrated on a large integrated circuit, because they are fault tolerable. The integrated circuit for the control unit is connected on the large integrated circuit by a silicon on silicon technique (in which a silicon substrate is connected on another silicon substrate).

According to the invention, the modular neural network is capable of rapidly executing learning and operation. Since each module can learn individually, the rapid learning and operation are made possible. The number of processors mounted per a certain area is the substantially same as that provided if all the processors are arranged to operate in an SIMD manner. Further, each module is allowed to be operated by the corresponding instruction set.

According to the invention, a large-scale information processing system can be arranged very compactly.

According to the invention, a neuron computer is allowed to have an implementation having quite a lot of neurons. An application can be developed in each module and the partial application for each module are configured to build an overall application system. This is a quite efficient development of the application. Moreover, the present invention provides a high-speed computation for a neuron computer as well as for a physical simulation. If the invention applies to a workstation, a wider range of applications are used in the workstation.

BRIEF DESCRIPTION OF THE DRAWINGS

Fig. 1 is a block diagram showing an overall arrangement of the present invention;

Fig. 2 is a diagram showing one module implemented by a wafer scale integration included in the present invention;

Fig. 3 is a circuit diagram showing an arrangement of a neuron processor;

Fig. 4 is a diagram showing a communication unit for executing a communication between modules;

Fig. 5 is an explanatory view showing a memory space provided in a local processor;

Fig. 6 is an explanatory view showing a broadcast architecture;

Fig. 7 is an explanatory view showing a memory space provided in a global processor;

Fig. 8 is a block diagram showing a communicating method between modules;

Fig. 9 is a view showing an interconnecting neural network;

Fig. 10 is a block diagram showing an operating method on the broadcasting architecture in the interconnecting neural network;

Fig. 11 is a view showing how the interconnecting neural network is operated on the two modules;

Fig. 12 is a diagram showing how the interconnecting neural network is operated on the two modules;

Fig. 13 is a block diagram showing a utilization of the present invention;

Fig. 14 is a block diagram showing how the invention is applied to a part of a robot brain;

Fig. 15 is an explanatory view showing a silicon on silicon technique;

Fig. 16 is an explanatory view showing a silicon on board technique;

Fig. 17 is an explanatory view showing an interconnection between boards;

Fig. 18 is an explanatory view showing a cooling method;

Fig. 19 is an explanatory view showing a clock identical wiring length;

Fig. 20 is a block diagram showing how the invention applies to a workstation as an example;

Fig. 21 is a block diagram showing how the invention applies to a database search as an example; and

Fig. 22 is a block diagram showing another arrangement of the invention.

## DESCRIPTION OF THE PREFERRED EMBODIMENTS

Now, the description will be oriented to a concrete arrangement of the invention as referring to an embodiment. At first, the schematic arrangement of the embodiment will be described later.

$10^4$ operating blocks served as functional blocks (for rapidly operating a scalar product) are integrated on a 10-cm cube wafer scale integration (WSI). A scalar processor and an analog to digital converter are mounted through the effect of a silicon-on-silicon technique for forming one module. Through the analog to digital converter, an analog signal can be applied from a sensor or the like to the module. On the module, a working memory for the scalar processor is provided so as to store the instruction sets for the $10^4$ operating blocks. The scalar processor can randomly access the working memory, an output of each operating block and a local memory inside of the operating block. Further, the scalar processor controls issuance of an instruction to each operating block. The operating blocks are connected through a data bus provided inside of the module in a manner to broadcast data among the operating blocks. For connecting 100 modules, a 100-word inter-module bus is used. Each module provides 100 communicating buffer making up of $10^4$ words, each of which is connected to each channel of the inter-module bus. Each operating block supplies an output to the internal data bus inside of each module. The outputs from the operating blocks are sequentially written in all the module communicating buffers through the inter-module bus. Each module can know an output of the operating block by reading data from the communicating buffer. The writing timing takes place on the data sending side. Hence, the inter-module communication is carried out asynchronously.

Further, there is provided a scalar processor which is regarded (used) as the working memories and the local memories inside of all the modules as memory space. For example, it is considered that the memory inside of the neuron processor is a local memory.

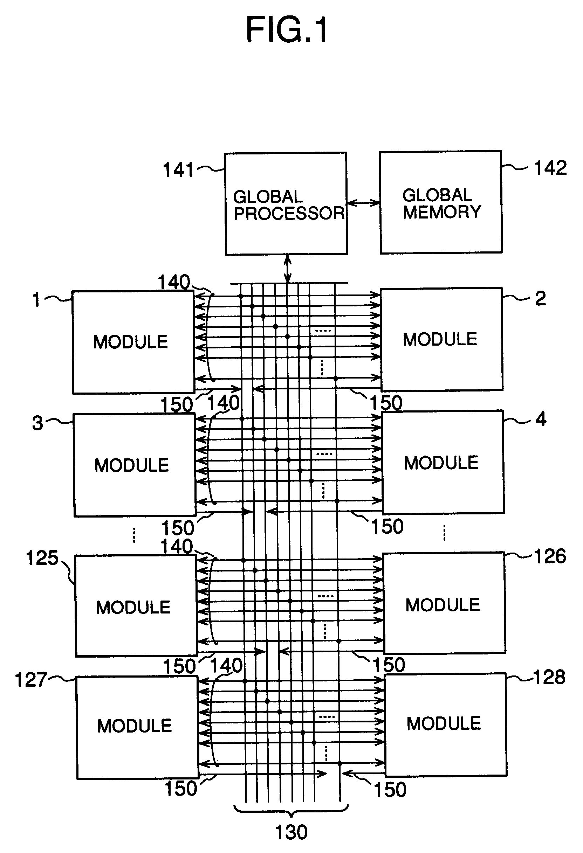

The foregoing arrangement of the invention will be described as referring to Figs. 1 to 8. At first, each figure will be described and then the operation will be described as referring to the drawings.

Fig. 1 shows the overall arrangement. Numerals 1 to 128 denote modules. A numeral 130 denotes an inter-module bus. A numeral 140 denotes a module input but. A numeral 150 denotes a module output bus. A numeral 141 denotes a global processor. A numeral 142 denotes a global processor. The global memory 142 is connected to the global processor 141 and the global processor 141 and the modules 1 to 128 are connected through the inter-module bus 130, the module input bus 140 and the module output bus 150, the latter two of which are located between the modules and the inter-module bus 130.

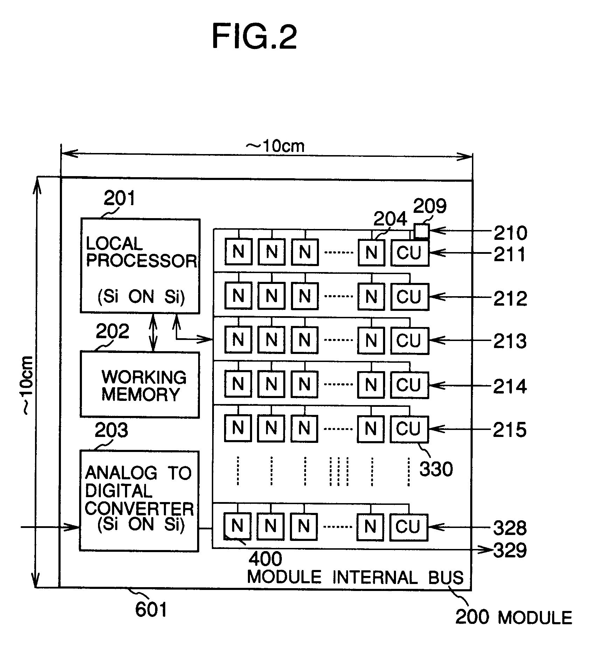

Fig. 2 shows a module arrangement of each module 1 to 128. A numeral 200 denotes a module which is the same as the modules 1 to 128. A numeral 201 denotes a local processor. A numeral 202 denotes a working memory. A numeral 203 denotes an analog to digital converter. A numeral 204 denotes a neuron processor. A numeral 209 denotes a module input buffer. Numerals 210 to 328 denote module input buses. The module input bus 210 receives a signal from the global processor 141. The module input buses 211 to 328 receive signals from the modules 1 to 128, respectively. A numeral 329 denotes a module output bus. A numeral 330 denotes a communication unit which is connected to each of the module input buses 211 to 328. A numeral 400 denotes a module internal bus. The local processor 201 and the analog to digital converter 203 are connected on the module 200 by the conventional silicon on silicon technique in which a silicon substrate is directly connected on another silicon (Si) substrate by a solder bump. The working memory 202 and the module internal bus 400 are connected to the local processor 201. The neuron processor 204, the analog to digital converter 203, the communication unit 330 and the module input buffer 209 provided inside of the module 200 are connected to each other through the module internal bus 400. The module input buffer 209 takes a signal of the global processor 141 through the module input bus 210 and outputs the signal to the module input bus 400. The communication between the neuron processors 204 is performed by the broadcast through the module internal bus 400. Numerals 211 to 328 denote module input buses which receive output signals of the modules 1 to 128, respectively. Those signals are read by 128 communication units 330. Like the neuron processor 204, the signal values read by the communication units 330 are allowed to be broadcast. The values broadcast to the module internal bus 400 are allowed to be output to the inter-module bus 130 through the module output bus 329.

To configure the invention compactly, a block having strong fault tolerance such as the neuron processor 204 and the working memory 202 are mounted on one large integrated circuit 601. A control unit having weak fault tolerance such as the local processor 201 and the analog to digital converter 203 disclosed herein is connected to the large integrated circuit 601 by the silicon on silicon technique. The large integrated circuit 601 means a wafer scale integration (WSI).

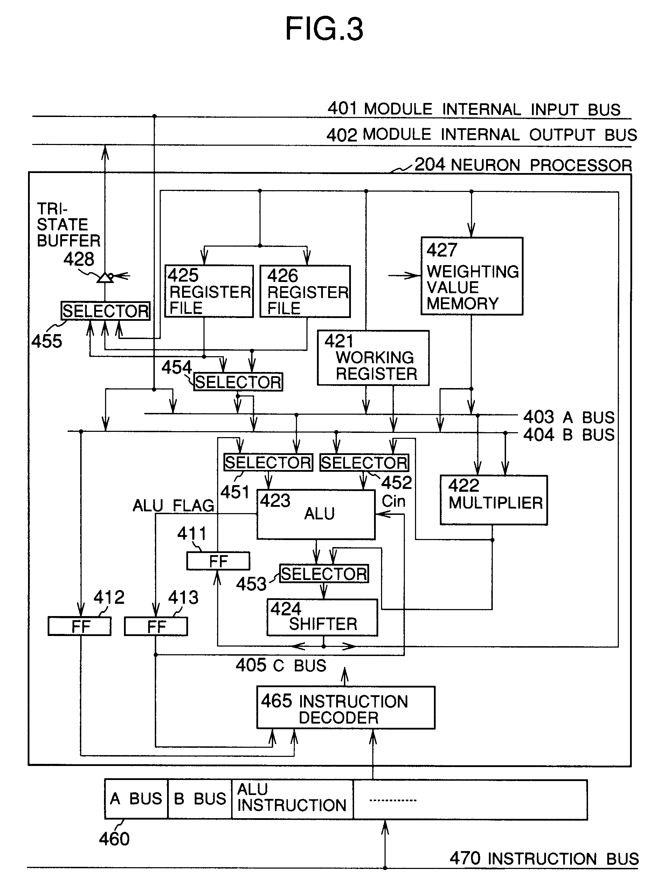

Fig. 3 shows an arrangement of the neuron processor 204 and a neuron instruction 460 for controlling an operation of the neuron processor 204. Herein, a numeral 401 denotes a module internal input bus. A numeral 402 denotes a module internal output bus. A numeral 470 denotes an instruction bus, which corresponds to the module internal bus 400 shown in Fig. 2. A numeral 402 denotes an A bus. A numeral 404 denotes a B bus. A numeral 405 denotes a C bus. Numerals 411 to 413 denote flip-flops (FF). A numeral 421 denotes a working register. A numeral 422 denotes a multiplier. A numeral 423 denotes an arithmetic and logic unit (ALU). A numeral 424 denotes a shifter. Numerals 425 to 426 denote register files. A numeral 427 denotes a weighting value memory. A numeral 428 denotes a tri-state buffer. Numerals 451 to 455 denote 2-1 or 3-1 selectors. The A bus 403 and the B bus 440 send a signal to the multiplier 422. The ALU 423 receive signals from the selectors 451 and 452. The selector 451 selects the FF 411 or the B bus 403 as one input of the ALU 423. The selector 452 selects one of the signals from the B bus 404 and the multiplier 422 as the other input of the ALU 423. The selector 453 selects one of the signals from the ALU 423 and the multiplier 422 and outputs the selected signal to the C bus 405. The FF 411 can read a value on the C bus 405. The FF 411 can be reset by the neuron instruction 460. The working register 421, the register files 425 to 426, and the weighting value memory 427 enable to read a value on the C bus 405. The selector 455 selects one of the signals from the C bus 405 and the register files 425 to 426 and output it to the tri-state buffer 428. The tri-state buffer 428 has an output terminal connected to the module internal output bus 402. The tri-state buffer 428 is controlled by a neuron processor select signal of the neuron instruction 460.

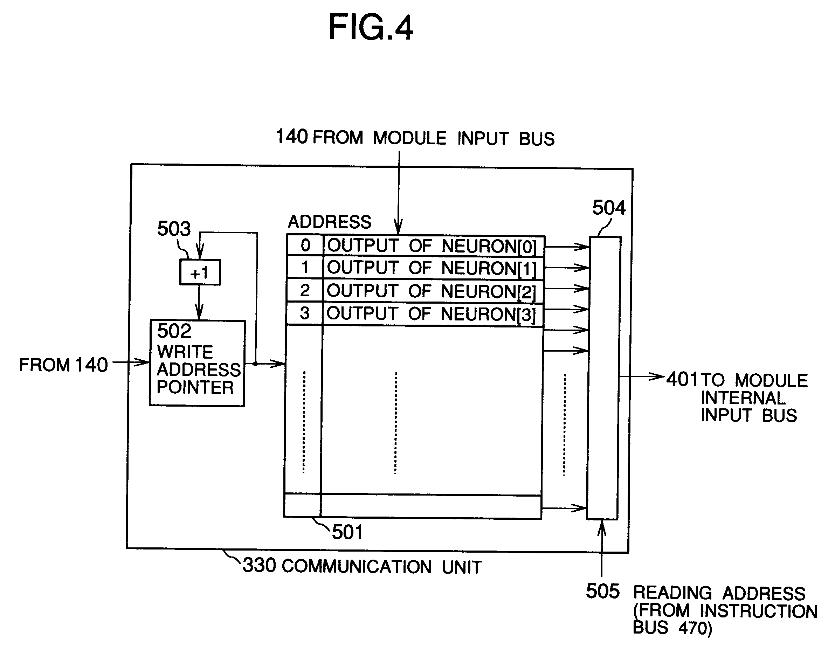

Fig. 4 shows an embodiment of the communication unit 330 shown in Fig. 2 in detail. Herein, a numeral 501 denotes a buffer array. A numeral 502 denotes a write address pointer for the buffer array 501. A numeral 503 denotes a one-incrementer. A numeral 504 denotes a reading selector which serves to output the value of the buffer array 501 selected on a reading address 505 to the module internal output bus 402. The reading address 505 is input from the instruction bus 470.

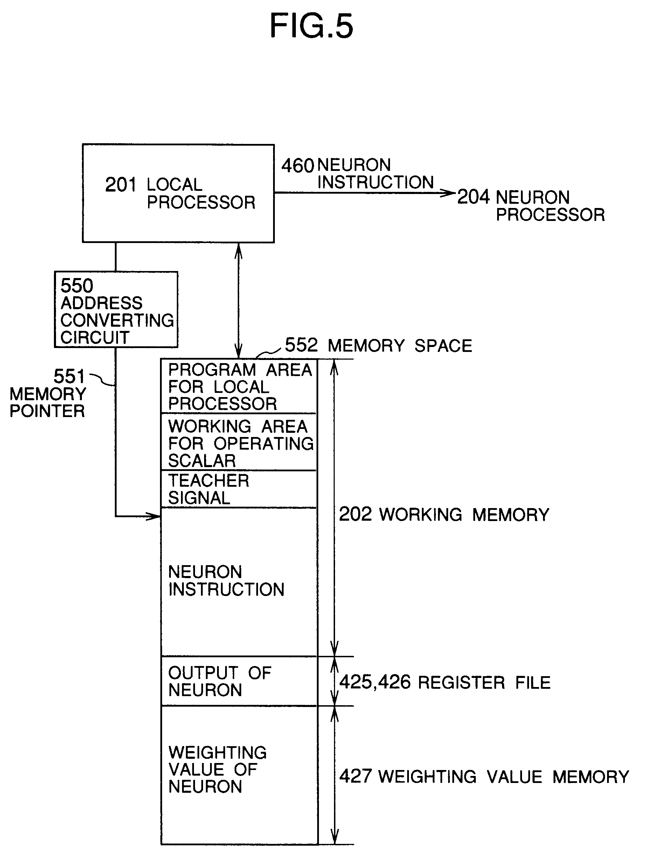

Fig. 5 shows a memory space viewed from the local processor 201 shown in Fig. 2. A numeral 552 denotes the memory space itself. Herein, a numeral 550 denotes an address converting circuit which serves to convert an address on the memory into a physical address in response to an access request from the local processor 201. Moreover, the address converting circuit 550 avoids the defects on the memory of the module for keeping the memory space as a linear memory. That is, from a viewpoint of the local processor 201, the data stored in the working memory 202, the register files 425 to 426 and the weighting value memory 427 on the module 200 are viewed as the data on the same memory space. The working memory 202 holds a set of neuron instructions 460. The local processor 204 sequentially reads the neuron instructions 460 and sends it to the neuron processor 204 for controlling the neuron processor 204.

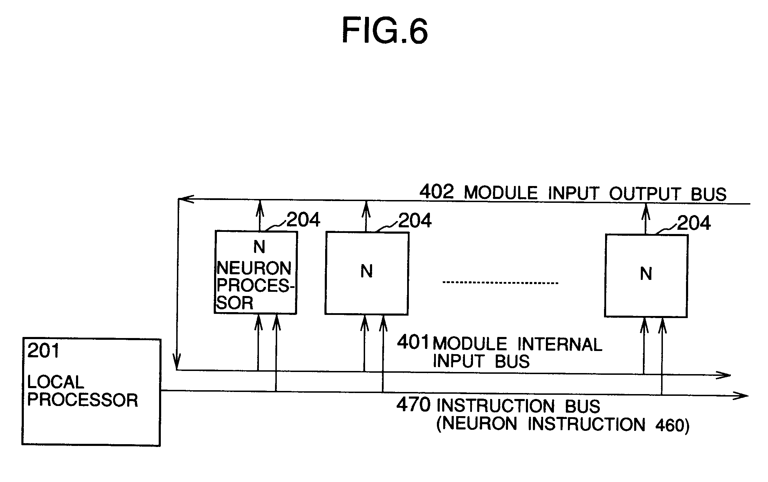

Fig. 6 illustrates how a plurality of neuron processors 204 inside of the module 200 are operated in parallel. As shown, the module internal bus 400 is configured of the module internal input bus 401, the module internal output bus 402, and the instruction bus 470. Each neuron processor 204 receives a neuron instruction sent from the local processor 201 through the instruction bus 470. Each neuron processor 204 is connected to the module internal input bus 401 and the module internal output bus 402. In response to the neuron instruction 460, the neuron processor specified by the instruction serves to supply its output to the module internal output bus 402. The output is sent from the module internal output bus 402 to the module internal input bus 401 and then to each neuron processor 204. Each neuron processor 204 can operate the received data according to the neuron instruction 460.

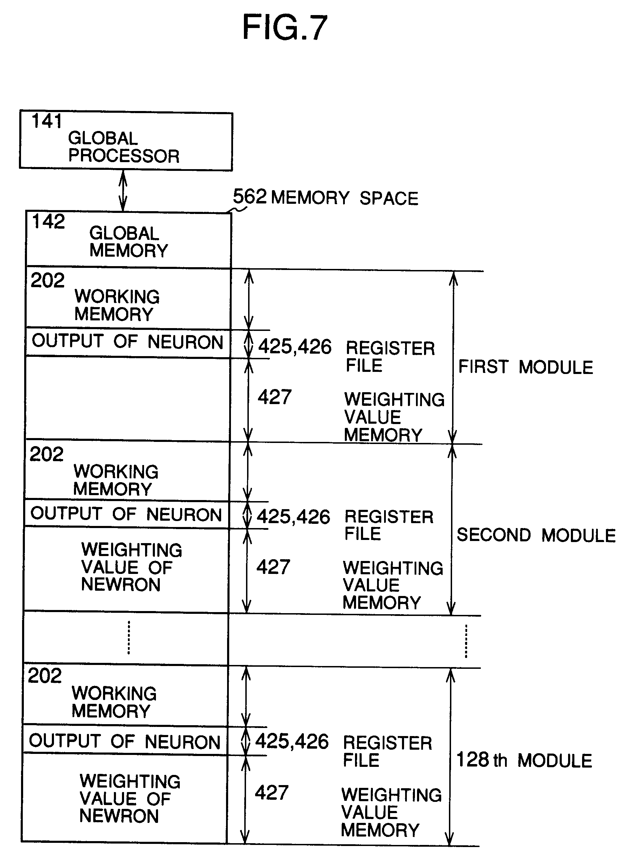

Fig. 7 shows a memory space viewed from the global processor 141 shown in Fig. 1. A numeral 562 denotes the memory space. As another viewpoint from the global processor 141, the memory space may be considered as consecutive memory spaces 552 viewed from the local processor 201. The arrangements shown in Figs. 5 and 6 result in enabling to operate the local processor 201 and the global processor 141 as a scalar processor having a very large memory space. Further, the neuron operation such as a scalar operation can be executed on the large memory space.

For processing the data in such a parallel computer, the parallel computer has been heretofore connected to the host computer so that the host computer works or creates data from the parallel computer and loads the data onto the parallel computer. On the other hand, the present invention is capable of performing the scalar processing and the parallel processing on the same memory space.

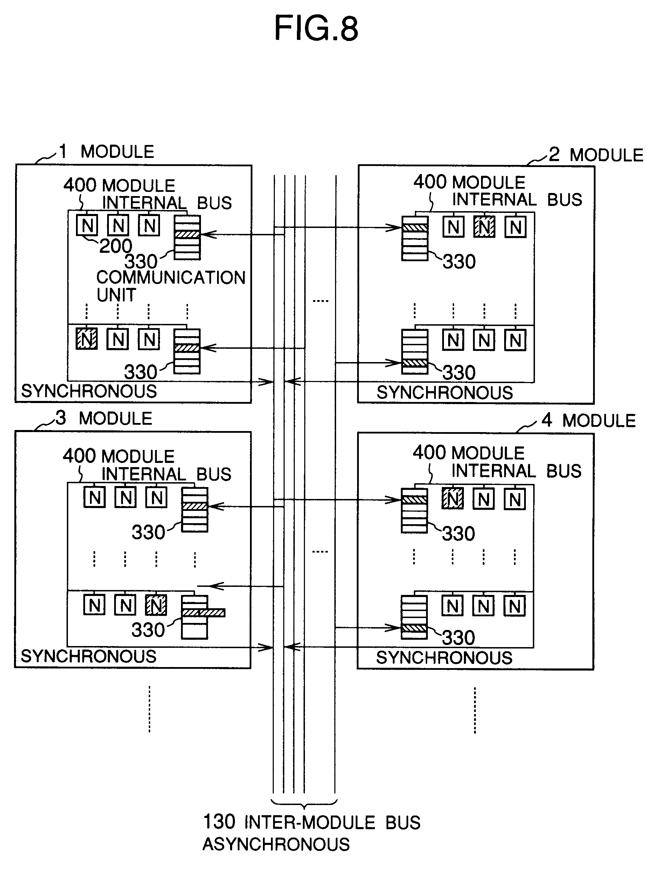

Fig. 8 shows the communicating method between the modules 1 and 128.

How a neural model is operated at each module 200 will be described.

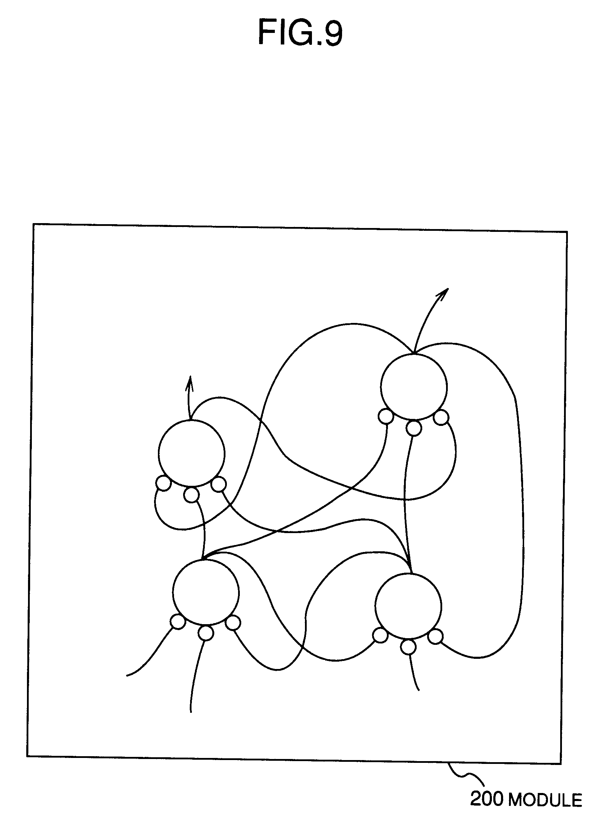

Fig. 9 shows an interconnecting neural network implemented on one module 200. How the neural network works and its general model will be described later.

In the interconnecting neural network, each neuron can be represented by a state equation of:

$$\tau du_i/dt = -u_i + \Sigma w_{ij}x_j + I_i \quad (1)$$

$$x_i = f(u_i) \quad (2)$$

wherein an output of the neuron i is $x_i$, the internal energy is $u_i$, a weighting value to the neuron j is $w_{ij}$, and I denotes a so-called constant current source. The constant current source I may be omitted by connecting a plurality of weighted neurons each for outputting its maximum value through synapses. f in the equation (2) is a non-linear function. In general, the function is a saturation function such as a sigmoid function of:

$$f(u_i) = 1/(1 - \exp(-u_i/T)) \quad (3)$$

To digitally compute the equations (1) to (3), the equation (1) is differentiated on a time width $\Delta t$. That is, the following equations (4) and (5) are computed at each time.

$$u_{t+1} = u_t - \Delta t/\tau (Wx_t - u_t) \quad (4)$$

$$x_{t+1} = f(u_{t+1}) \quad (5)$$

where the vectors u and x stand for the internal energy and output of all the neurons, the matrix W stands for the total weights, the vectors $u_t$ and $x_t$ stand for a vector at the time t, and the vectors $u_{t+1}$ and $x_{t+1}$ stand for the vector at the time $t+1$. How the equations (4) and (5) are computed in the module 200 will be described later.

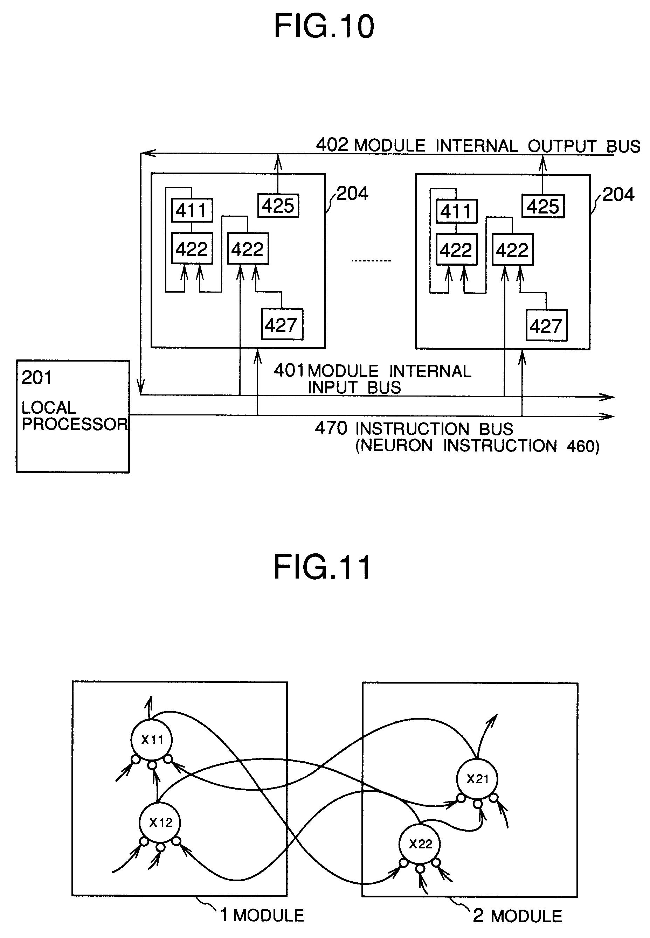

Fig. 10 shows how operating circuits, memories and flip-flops in the neuron processor 204 are connected when $Wx_t$ of the equation (4) is executed. The connection is allowed to be set by the neuron instruction 460. Each neuron processor 204 corresponds to each neuron. In each neuron processor 204, the multiplier 422 receives the data from the module internal input bus 401 and the weighting value memory 427. The ALU 422 receives the data from the multiplier 422 and the flip-flop 411. The additional result is written in the flip-flop 411. The local processor 201 sequentially selects the neuron processor 204 and the selected neuron processor 204 outputs its output $x_t$ to the module internal output bus 402. Each neuron processor provides its own address assigned thereto in advance. The local processor serves to generate the address for the neuron processor 204 and decode the address when performing the above control. As shown in Fig. 3, each neuron processor 204 holds $x_t$ in the register file 425 and outputs it through the selector 455 and the tri-state buffer 428. Further, $\Delta t$, $\tau$ and $u_t$ in the equation (4) are held in the working register 421, the register file 425 or the working register 421. As such, the ALU 423, the multiplier 422, the shifter 424 and the working register 421 are used for calculating the equation (4). The non-linear conversion can be calculated by Chebyshev approximation of:

$$x_{t+1} = \alpha_0 + \alpha_1 u_{t+1} + \alpha_3 u_{t+1}^3 + \alpha_5 u_{t+1}^5 + \alpha_7 u_{t+1}^7 \quad (6)$$

where $\alpha_1$ to $\alpha_7$ denote constants determined by the function f. This computation can be carried out by executing a plurality of neuron instructions 460.

As set forth above, how the neuron processor 204 works is determined on the neuron instruction 460. Hence, any neuron model can be computed.

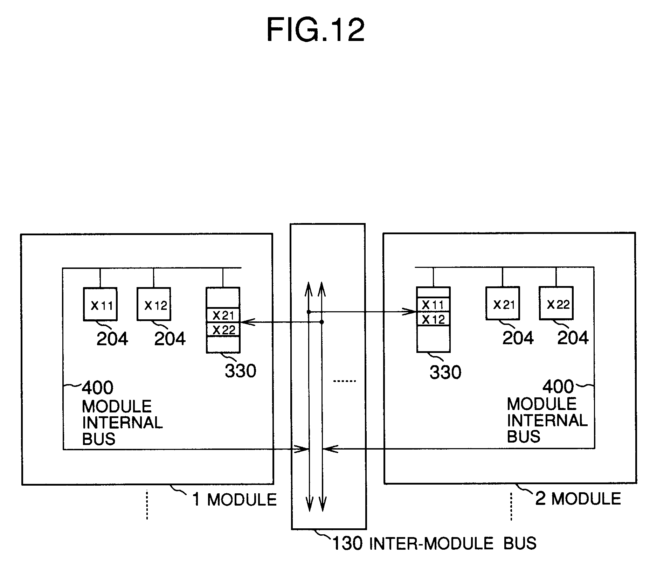

Figs. 11 and 12 show the interconnecting neural network arranged on the two modules. For example, the neurons 11 and 12 are allocated to the neuron processor 204 on the module 1 and the neurons 21 and 22 are allocated to the module 2.

In each module, the neuron processor 20 broadcasts data through the module internal bus 400. The broadcast is done independently in both of the modules. At the same time, the value output to the module internal bus 400 of the module 1 is output to the inter-module bus 130 through the module output bus 329 through which the value is sent to the communication unit 330 of each module 200. Each module 200 has the communication unit 330 corresponding to each of the other modules 200. The communication unit 330 is connected to the corresponding inter-module bus 130. The writing onto each communication unit 330 is done on the timing of the sending terminal. In Fig. 12, the module 1 enables to read the data from the neurons 21 and 22 on the module 2 by reading the data from the communication unit 330. Likewise, the module 1 enables to read the outputs of the neurons 11 and 12 on the module 2 by reading the data from the communication unit 330. As shown in Fig. 4, the communication unit 330 reads the value sequentially sent from the module input bus 140 in the buffer pointed by the writing address pointer 502. At the same time, the one-incrementer 503 serves to increment the address pointer 502 by 1. Each output of the buffer array 501 is sent to the selector 504 from which the output is sent out to the module internal input bus in response to the reading address 505. The data sent on the module input bus 140 is written on the buffer array 501. As shown in Figs. 1 and 8, all the modules 200 and all the inter-module buses 130 are connected in a similar manner for performing communication among all the neuron processors 204. The writing onto each communication unit 330 is done on the timing of the sending side. Hence, each module operates on its own timing and instruction set.

As a drawback, the inter-module bus 130 has so long a wiring that it may provide a high load. If so, though the rapid operation is done inside of the module, the inter-module bus 130 may not follow the operating speed. Even in this case, however, since the invention has a capability of executing communication between the modules in an asynchronous manner, the inside of the module 200 may operate at 100 MHz and the inter-module bus 130 may operates at 50 Hz. In this case, it is considered that the communication between the neurons takes more time than the operation of the inside of the module 200.

Likewise, the communication among a plurality of modules is made possible. If the communication unit 330 provides the same number of buffer arrays 501 as the neuron processors 204 of each module, the complete interconnection among all the neurons is made possible. Normally, the number of connections between the modules is smaller than that of connections inside of the module. Hence, the smaller number of buffers than that of the neuron processors may be normally prepared.

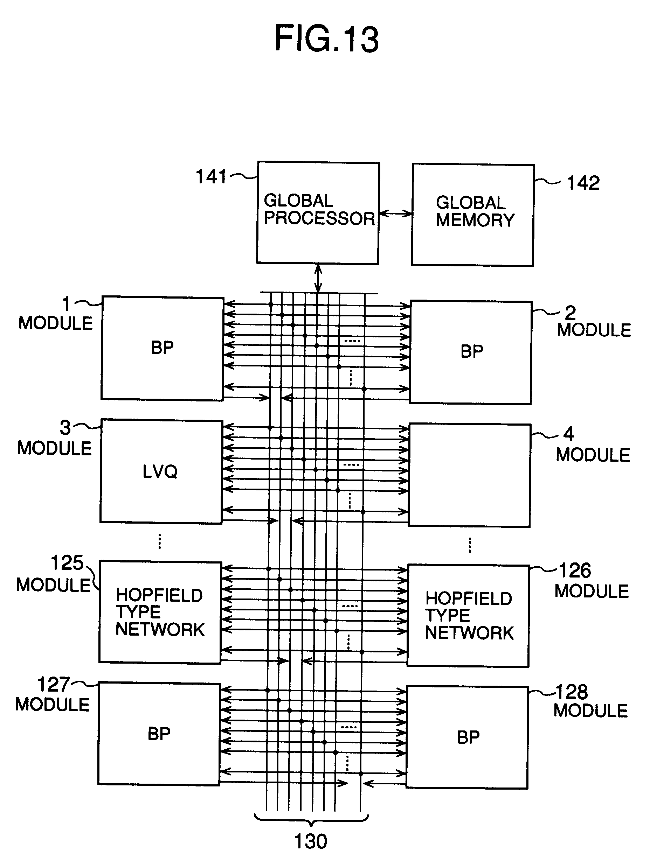

Fig. 13 shows a utilization of the invention. As shown, the modules 1 to 128 are allowed to perform a learning and a self-organizing functions according to the individual algorithm and data. Those modules are allowed to be operated in parallel. As shown in Figs. 11 and 12, it is possible to use a plurality of modules 200 for operating the same model. In the utilization shown in Fig. 13, the modules 1 to 2 and 127 to 128 serve to perform a back propagation learning function, the module 3 serves to perform a learning vector quantization function, the module 4 serves to perform a competition learning function, and the modules 125 to 126 are used as a Hopfield type network. The Hopfield type network performs an initial visualization such as noise removal and edge detection. The visualized result is applied into the hierarchical network for performing a back propagation learning function. In the network, the pattern recognition is made possible. Based on the vector quantization model, the input character image is recognized as a character. The recognized character data is sent to the hierarchical network from which a phoneme data is output. Another network, if any, is used for synthesizing a voice. This utilization may be applied to the module non-illustrated in Fig. 13. In a case of treating a series data, it is also effective to use a recurrent neural network.

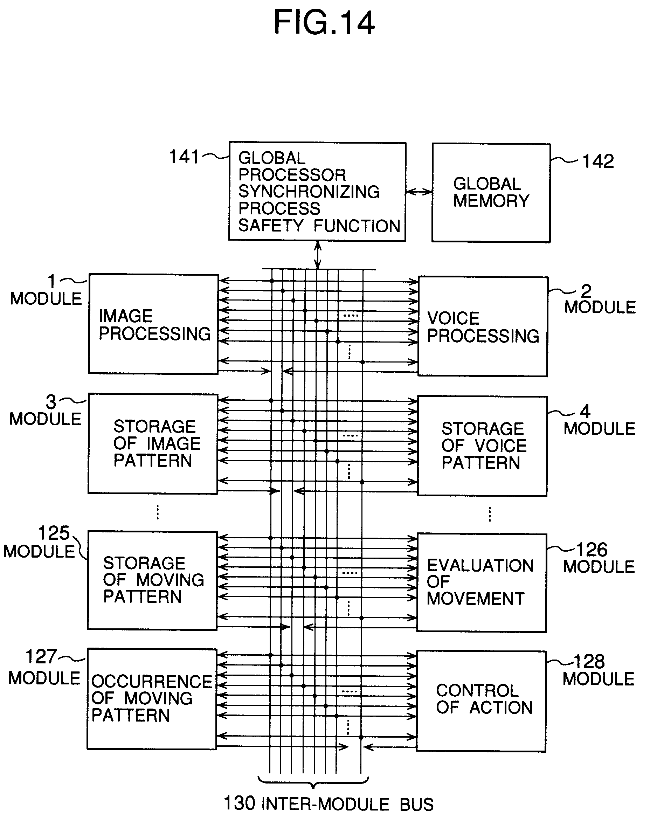

Fig. 14 shows another utilization of this invention in which the operation is represented in a functional manner. It is used as a robot brain. About $10^6$ processors is not enough numerous to produce the robot brain but may produce a partial operation of the robot brain. For example, the module 1 detects the features of the input image and compares with the image stored in the module 3. The input voice signal is recognized by the modules 2 and 4. The module 127 reads the recognized image, the recognized speech and both of them and generates an operating pattern for them. The module 125 stores the operating pattern. The module 128 converts the operating pattern into a signal on which the joints of the robots are operated. The action of the robot is evaluated by the module 126 so as to learn a smoother operating pattern.

According to the invention, it is possible to configure $10^6$ or more processors as a neural system. As shown in Fig. 2, each module provides the local processor 201 by which the conventional AI (Artificial Intelligence) techniques such as symbol processing and qualitative reasoning are made possible. The neuron processor serves to determine a membership function of a fuzzy theory and the local processor 201 or the global processor 141 may do judgement according to the fuzzy theory. A certain module may do information processing on the neuron model and another module may do information processing according to the fuzzy theory in parallel.

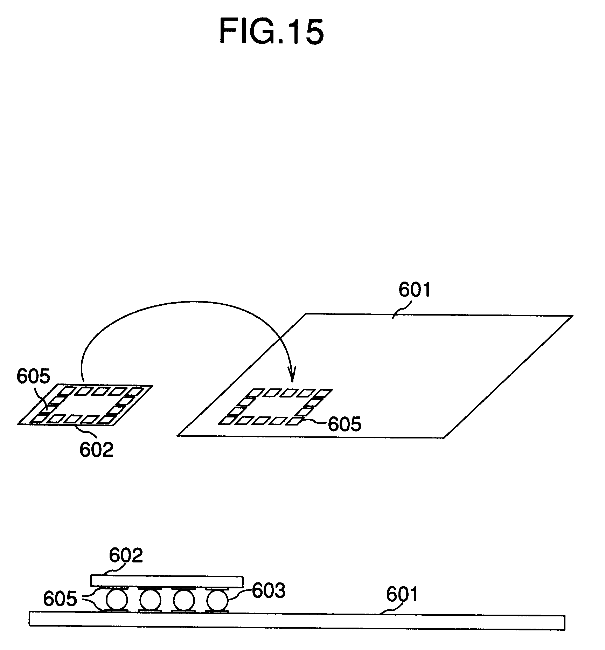

In turn, the description will be oriented to how the invention is mounted, assembled and cooled as referring to Figs. 15 to 18.

Fig. 15 shows a silicon on silicon technique of the module 200. In Fig. 15, a numeral 601 denotes a large integrated circuit. A numeral 602 denotes an integrated circuit. A numeral 603 denotes a solder bump connected between the large integrated circuit 601 and the integrated circuit 602. A numeral 605 denotes a pad for connecting the bump 603. As shown, a signal line connected between the integrated circuit 602 and the large integrated circuit 601 and the pad for feeding a power are fixed and connected through the bump located therebetween.

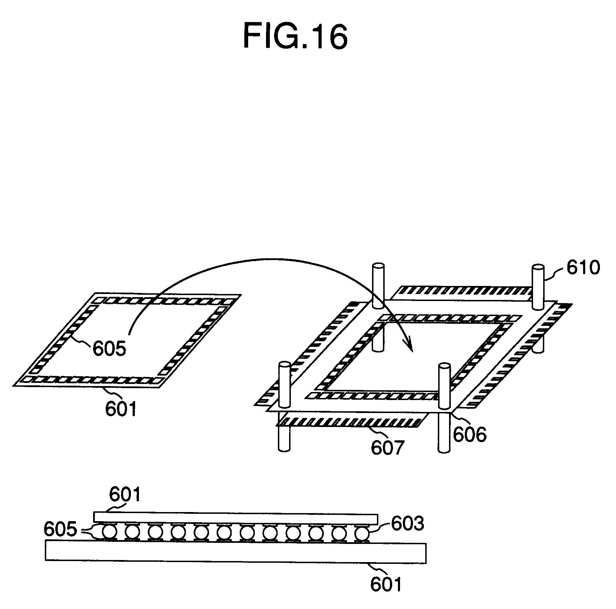

Fig. 16 shows how the board is connected to the large integrated circuit 601 shown in Fig. 15. A numeral 605 denotes a pad, A numeral 607 denotes a connector to be connected to another board 606. A numeral 610 denotes a connecting pin through which the boards 606 are connected for stacking the boards 606. Like the method of connecting the silicon with the silicon as shown in Fig. 15, the pad 605 on the board is located as opposed to the pad 605 on the large integrated circuit 601 and both of the pads 605 are connected through the bump 603 located therebetween.

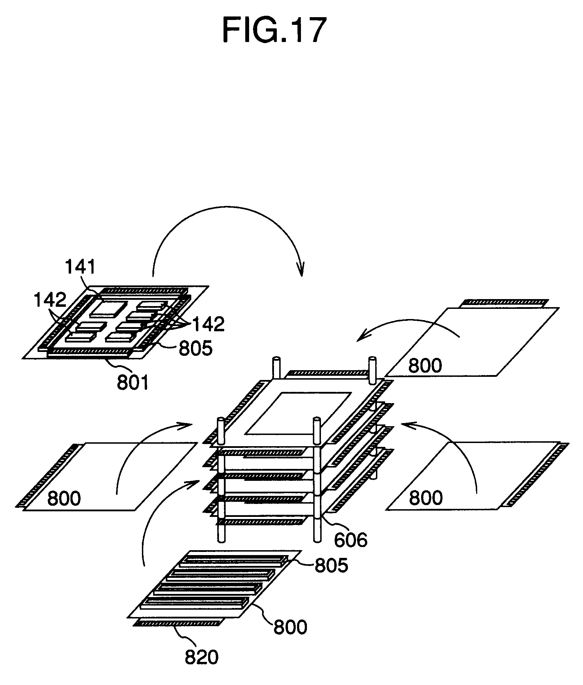

Fig. 17 shows how the boards are connected and how the boards are assembled. As shown, a numeral 800 denotes a connecting board. A numeral 801 denotes a board. Numerals 805 and 820 denote connectors. On the board 801, the global processor 141 and the global memory 142 are mounted. In the illustration of Fig. 17, the four boards 606 are stacked. It goes without saying that more boards 606 may be stacked. The boards 606 are connected by the connecting pins 610 as shown in Fig. 16 and the connecting boards 800 are pasted on the four sides of the board stack. In the connection, the connector 607 of the board 606 shown in Fig. 16 corresponds to the connector 805 of the connecting board 800 shown in Fig. 17. The connector 820 of the connecting board 800 corresponds to the connector 805 of the board 801.

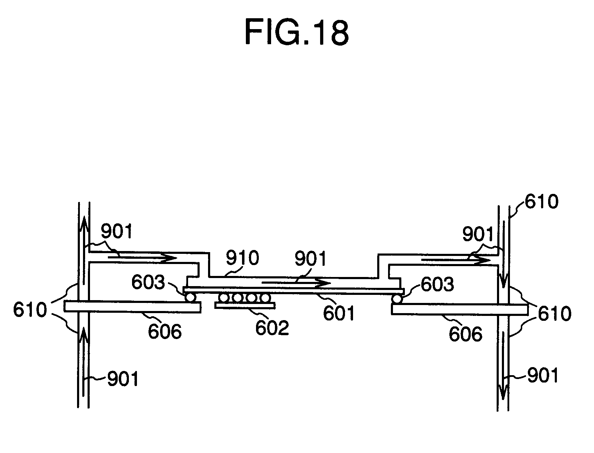

Next, the description will be directed to how each integrated circuit is cooled down. In the arrangement shown in Fig. 17, the signal lines between the boards are connected on the four sides. Hence, a quite large number of connections between the board are made possible. As will be understood from the connection shown in Fig. 17, however, the board stack is sealed. This may result in making the temperature of the stack inside so high. In this case, the method shown in Fig. 18 makes it possible to cool down the integrated circuit. In Fig. 18, a numeral 901 denotes cooling water. A numeral 910 denotes a cooling plate. The connecting pin 610 connecting between the boards 606 serves as a passage of the cooling water 901. On each board 606, the cooling water 901 is pulled from the connecting pin 610 to the cooling plate 910 connected to the large area circuit 601. The used cooling water 901 is returned into the connecting pin 610 located in opposition. This is how the inside of the sealed integrated circuit is cooled down.

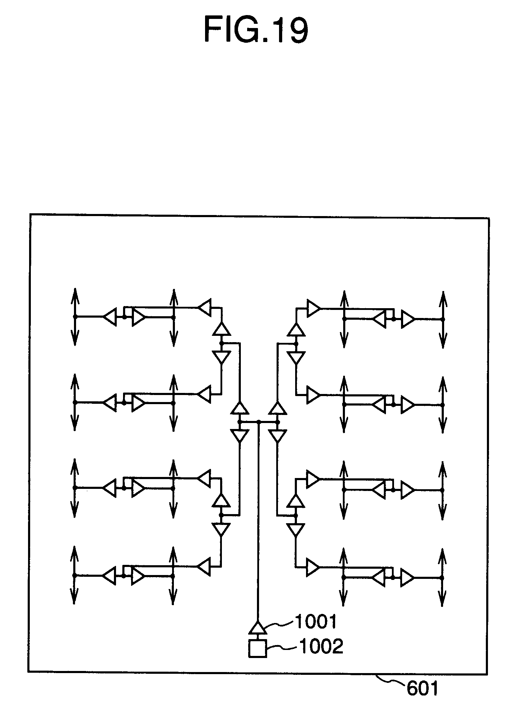

Next, the description will be directed to how to feed a clock power for reducing skews appearing in the necessary clocks. This needs to operate the large integrated circuit at high speed. In Fig. 19, on the large integrated circuit 601, a buffer 1001 and a pad 1002 are mounted. As shown in Fig. 2, it is difficult to rapidly perform the synchronous operations on the large integrated circuit, because a large clock skew due to a signal delay takes place. To overcome this drawback, as shown in Fig. 19, at first, a clock signal line is pulled from the external into the center of the large integrated circuit. Then, the clock signal line is pulled around at a first middle point between the center and the edge, at a second middle point between the previous point and the edge, and so forth. The identical wiring length is kept at any location on the large integrated circuit. This results in reducing a clock skew appearing in the large integrated circuit.

The foregoing connecting, assembling and cooling methods make it possible to implement the arrangement shown in Fig. 1.

The foregoing description has been concerned with how the neural network model is rapidly operated. Next, the description will be directed to an embodiment where the other kind of information processing is executed.

In general, to simulate a physical phenomenon on a computer, the physical phenomenon is represented by differential equations to be solved. Those equations are represented as nonlinear equations at each time step by the integral formula and the difference equation. Then, the nonlinear equations are solved by the Neuton Raphson method for defining the state at each time. At each repetitive step in the Neuton Raphson method, the following nonlinear simultaneous equation is solved.

$$Ax = b \qquad (6)$$

where A denotes a matrix of n x n, b denotes an n-degree vector, x denotes an n-degree vector, that is, an unknown to be derived, and n denotes a dimension of a system to be derived. To solve the equation (6), some methods can be referred. Herein, it is assumed that a linear relaxation based method is used. As one of the linear relaxation method, a Jacobi's method can be referred. In the Jacobi's method, the matrix A is divided as follows.

$$A = L + D + U \qquad (7)$$

where L denotes lower triangle elements, D denotes diagonal elements and E denotes upper triangle elements. Based on an initial value $x_0$, the following repetition formula is repeated and converged for obtaining a solution.

$$x_{k+1} = 1/D \ (b - (L + U)x_k) \qquad (8)$$

To solve the equation (8), each element of the vector x is calculated by each neuron processor 204. The weighting value memory 427 of each neuron processor 204 stores each row element of the matrix A. For the diagonal element, its inverse obtained in advance is stored in the working register 421. The elements of the vector b are stored in the working register 421 or the weighting value memory 427. The previous repeated result $x_k$ is stored in the register file 425. The local processor 201 sequentially specifies the relevant neuron processors 204 so that the previous repeated result $x_k$ may be broadcast onto the module internal bus 400. Each neuron processor 204 reads the elements of the matrix A corresponding to the part $(L+U)x_k$ of the equation (8) from the weighting value memory 427 and the multiplier 422 performs a multiplication. Then, the ALU 423 and the FF 411 operate to sequentially perform an accumulative addition of the multiplied result. When the overall broadcast has been terminated, the calculated result of the part of $(L + U) x_k$ of the equation (8) can be obtained. Then, the remaining part of the equation (8) is further calculated. By multiplying the final value by an inverse of the diagonal element, the repeated result $x_{k+1}$ at this time can be obtained. The result $x_{k+1}$ is written in the register file 425. Then, the process goes to the next repetition. When the number of repetitions reach a certain value, the convergence is evaluated. If converged, it means that the equation (6) is solved. Like the neural network model, the plurality of modules 200 may be used for solving a large-scale equation.

The neural network models 1 to 3 are simultaneous nonlinear differential equations. The foregoing calculation method has been integrated by the advance Euler's formula. As such, the present invention may apply to rapid calculation of the neural network model, general numerical value simulation, and image processing. For example, a moving image is applied into the neural network so that each frame may be sequentially loaded onto each module. Each module performs noise reduction and edge detection of each frame. The information of the previous frame is allowed to be read by the communication unit 330 for calculating information required for information processing of the moving image such as an optical flow.

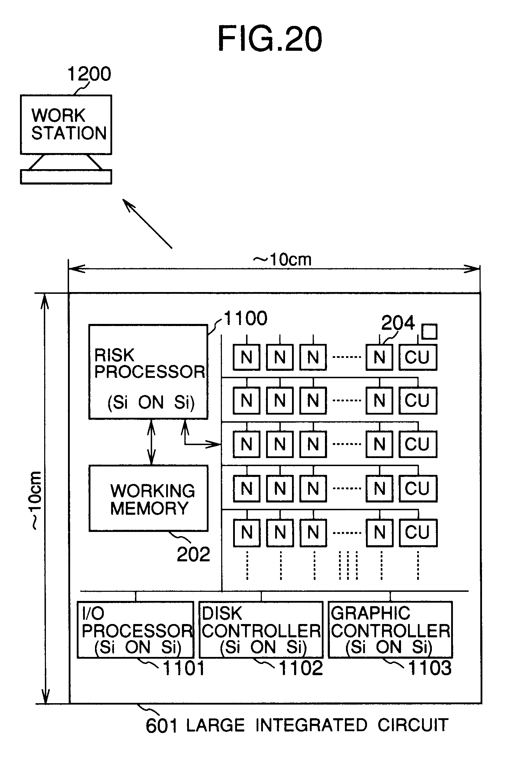

Fig. 20 shows an embodiment where the present invention may apply to the workstation. As shown, a numeral 1100 denotes a risk processor. A numeral 1101 denotes an I/O processor. A numeral 1102 denotes a disk controller. A numeral 1103 denotes a graphic controller. Some elements such as the risk processor 1100 and the I/O processor 1101 are mounted on the large integrated circuit 601 by means of the silicon on silicon technique as shown in Fig. 15. The risk processor 1100 holds a program such as an operating system in the working memory 202 of the integrated circuit 601 and operates according to the instruction given by the program. The output of the neuron processor 204 and the local memory are considered as the similar memory space to the working memory 202. The workstation arranged as above is capable of rapidly performing a calculation of the neural network as well as a numerical operation of a physical simulation with an operator provided in the neuron processor 204.

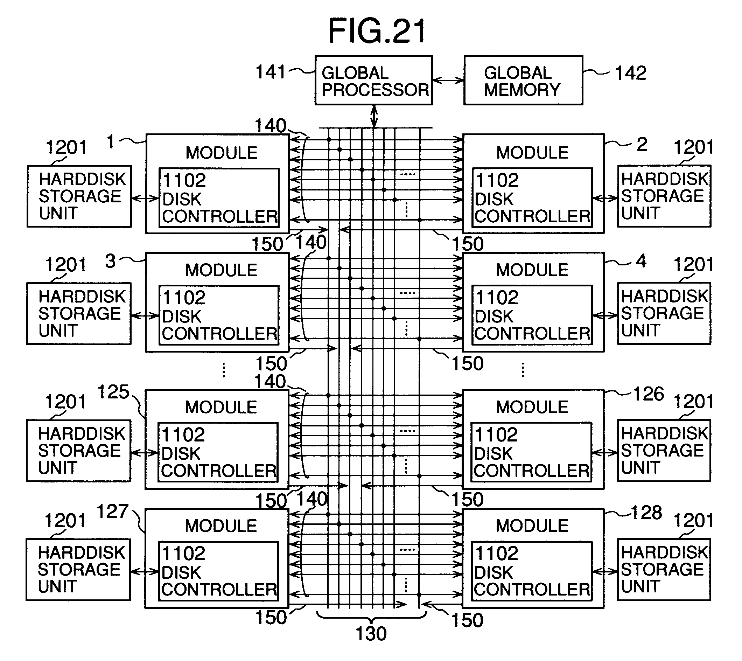

Fig. 21 shows how the invention searches a database in parallel. As shown, a numeral 1102 denotes a disk controller. A numeral 1201 denotes a harddisk storage unit. A numeral 1102 denotes a diks controller which is provided to each module. The harddisk storage unit 1201 is connected to each module through the disk controller 1102.

Each module enables to store and read the data of each harddisk storage unit 1201 connected thereto. The weighting value memory 427 holds a key word of the data stored in the harddisk storage unit 1201 connected thereto and an address of the data stored in the harddisk storage unit 1201. The global processor 141 sends a key word of the data to be retrieved to each module. Then, each module broadcasts the input key word to the neuron processor 204. In each neuron processor 204, the ALU 423 compares the key word broadcast thereto with the key word of the weighting value memory 427. If matched, the ALU 423 sends a data address to the local processor 201 inside of the module. The local processor 201 reads data from the harddisk storage unit 1201 through the disk controller 1102 and sends the data to the global processor 141. The above-mentioned retrieving operations are allowed to be executed in parallel. The number of the retrieving operations to be done in parallel is the same as the number of the neuron processors inside of the system.

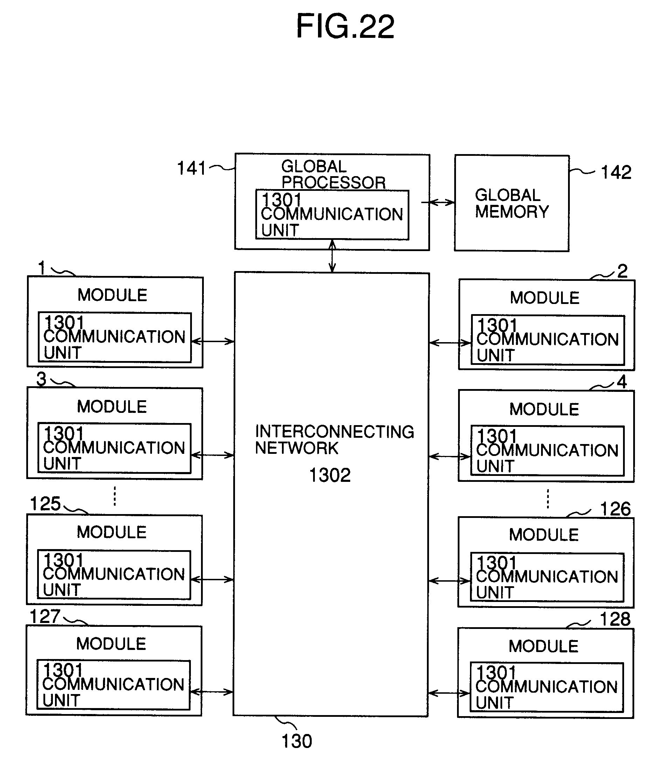

Fig. 22 shows another arrangement of the invention. As shown, a numeral 1301 denotes a communication unit. A numeral 1302 denotes a network. The connecting method shown in Fig. 1 has a different arrangement from that shown in Fig. 1. Each module is connected to the connecting network 1302 through the communication unit 1301. The connecting network 1302 uses as a network a bus connection, a tree connection, a torus connection, a ring connection, a digital n-cube network, and a super cubic ring.

## Claims

1.  An information processing apparatus comprising:

    a first integrated circuit substrate (601);

    a plurality of neuron processors (204) integrated on said first integrated circuit substrate (601) and for performing a scalar product;

    a second integrated circuit substrate (602) mounted on said first integrated circuit substrate (602);

    a control processor (201) integrated on said second integrated circuit (602) and for controlling said plurality of neuron processors (204);

    wherein said information processing apparatus composes one module operated as a neuron network.

2. An information processing apparatus as claimed in claim 1, wherein said first and second integrated circuit substrates (601, 201) are made of silicon sand the mount of said second and first integrated circuit (601, 201) uses a silicon on silicon technique.

3. An information processing apparatus as claimed in claim 1, wherein each of said plurality of neuron processors (204) provides an operating unit (423, 1422) and a memory (427) for holding a weighting value and a data bus (400) for connecting said plurality of neuron processors (204).

4. An information processing apparatus as claimed in claim 1, wherein a working memory (202) having an area for storing an operation instruction against said plurality of neuron processors (204).

5. An information processing apparatus as claimed in claim 1 comprising:
   a third integrated circuit substrate (203) mounted on said first integrated circuit substrate (601); and
   an analog to digital converter integrated on said third integrated circuit substrate (203) and for converting an analog signal into a digital signal.

6. An information processing apparatus comprising:
   a first integrated circuit substrate (601);
   a plurality of neuron processors integrated on said first integrated circuit substrate (601) and providing a memory (427) for holding a weighting value, an operating unit (422, 423) for operating a scalar product, and means for holding said operated scalar product;
   a data bus (400) integrated on said first integrated circuit substrate (601) and for connecting said plurality of neuron processors (204) with each other;
   a working memory (202) integrated on said first integrated circuit substrate (601) and for storing an operating instruction for at least said plurality of neuron processors (204);
   an instruction bus (470) integrated on said first integrated circuit substrate (601) and for sending said operation instruction to said plurality of neuron processors (204);
   a second integrated circuit substrate (201) mounted on said first integrated circuit substrate (601); and
   a control processor (201) integrated on said second integrated circuit substrate (602) and for controlling said plurality of neuron processors (204);
   wherein said information processing apparatus composes one module operating as a neuron network (Fig. 9).

7. An information processing apparatus as claimed in claim 6, wherein said control processor (201) enables to access said working memory (202) and said means for holding said operated scalar product of said plurality of neuron processor (204) as the same memory space.

8. An information processing apparatus comprising:
   a plurality of functional blocks (204) each providing an operating unit (422, 423) and a memory (427) for holding information;
   a first integrated circuit substrate (601) for connecting said plurality of functional blocks (204) with each other and having means (400) for communicating data, said means being integrated thereon; and
   a second integrated circuit substrate (201) for controlling generation of an operation instruction to said plurality of functional blocks (204) and a scalar processor (201) sharing a memory space with said plurality of functional blocks (204), said scalar processor (201) being integrated thereon;
   wherein said second integrated circuit substrate is mounted on said first integrated circuit substrate for making a single module.

9. An information processing apparatus as claimed in claim 8, wherein said functional block (204) contains a neuron processor and said scalar processor (201) contains a local processor (201).

10. An information processing system being characterized by connecting a plurality of information processing apparatuses with each other, each of said information processing apparatuses having a plurality of first functional (200) blocks connected with each other and a second functional block for issuing the same operation instruction to said plurality of first functional blocks.

11. An information processing system as claimed in claim 10 being characterized in that said information processing apparatus provides said plurality of first functional blocks each having an operating unit (422, 423) and a memory (427) for holding information, a data bus (400) for connecting said plurality of first functional blocks with each other, said second functional block for storing an operation instruction set to said plurality of first functional blocks and issuing said operation instruction set to said plurality of first functional blocks, and an instruction bus (470) for outputting said operation instruction set to said plurality of first functional blocks, said plurality of first functional blocks being operated according to said operation instruction set.

12. An information processing system as claimed in claim 10 being characterized by integrating on a single integrated circuit substrate (601) said plurality of first functional blocks included in said information processing apparatus.

13. An information processing system as claimed in claim 10 being characterized in that said information processing apparatuses compute the same or respective neural network models.

14. An information processing system as claimed in claim 13 being characterized in that said neural network model is an interconnecting neural network.

15. An information processing system as claimed in claim 10 being characterized in that said first functional block provides a neuron processor (204) and said second functional block provides a local processor (201).

16. An information processing system being characterized by providing a plurality of information processing apparatuses, each apparatus having functional blocks each for operating data and being operated in a single instruction multi data stream manner according to a single instruction set,
    wherein said plurality of information processing apparatuses serve to communicate with each other in an asynchronous manner and operate in a multi instruction multi data stream (MIMD) manner.

17. An information processing system as claimed in claim 16 being characterized in that each of said information processing apparatuses provides storage means (142) for sequentially storing a signal sequentially input from another information processing apparatus, a data bus (140) for connecting said plurality of functional blocks with said storage means (330), and means for sequentially outputting an output of a predetermined functional block output onto said data bus (400) to another information processing apparatus, said information processing apparatuses serving to communicate with each other in an asynchronous manner.

18. An information processing system as claimed in claim 17 being characterized in that each of said information processing apparatuses provides a scalar processor (201) for controlling generation of said single instruction set to said plurality of functional blocks being operated in a single instruction multi data stream manner.

19. An information processing system as claimed in claim 16 being characterized in that said plurality of functional blocks included in said information processing apparatus are integrated on a single integrated circuit substrate (601).

20. An information processing system being characterized by providing a plurality of information processing apparatuses each having a plurality of neuron processors (204) for operating a scalar product, each of said neuron processors (204) being operated according to a single instruction set,
    wherein said plurality of information processing apparatuses serve to communicate with each other in an asynchronous manner and operate in a multi instruction multi data stream (MIMD) manner.

21. An information processing apparatus as claimed in claim 20 being characterized in that at least two of said information processing apparatuses compute the same neural network model.

22. An information processing system as claimed in claim 21 being characterized in that said neural network model is an interconnecting neural network.

23. An information processing system being characterized by providing a plurality of information processing apparatuses, each of said apparatuses having a plurality of neuron processors (204) for operating a scalar product and a scalar processor (201) for controlling generation of a single instruction set to said plurality of neuron processor (204), said scalar processor (201) being able to access a memory space of said plurality of neuron processors (204), each of said apparatuses being operated in a single instruction multi data stream (SIMD) manner,
    wherein said plurality of information processing apparatuses serve to communicate with each other in an asynchronous manner and operate in a multi instruction multi data stream (MIMD) manner.

24. An information processing system comprising:

a plurality of information processing apparatuses, each apparatus having a plurality of neuron processors (204) for operating a scalar product and a first scalar processor (201) for controlling generation of a single instruction set to said plurality of neuron processors (204), said apparatuses serving to operate in a single instruction multi data stream (SIMD) manner; and

a second scalar processor (201) for controlling generation of a plurality of instruction sets to said plurality of information processing apparatuses;

wherein said plurality of information processing apparatuses serve to communicate with each other in an asynchronous manner and operate in a multi instruction multi data stream (MIMD) manner, and said second scalar processor (201) is able to access said first scalar processor (201) and a memory space of said plurality of neuron processors.

25. An information processing system comprising:

a plurality of information processing apparatuses, each of said apparatuses having a memory for holding information, an operating unit (423) for performing an operation about said information, a plurality of functional blocks each providing means for holding said operated result; a first scalar processor (201) for controlling generation of a single instruction set to said plurality of functional blocks, a storage area for storing said single instruction set, a working memory (202) of said first scalar processor (201), each of said apparatuses being operated in a single instruction multi data stream (SIMD) manner;

a second scalar processor (201) for controlling generation of a plurality of instruction sets against said plurality of information processing apparatuses; and

a working memory (202) for said second scalar processor (201);

wherein said plurality of information processing apparatuses serve to communicate in an asynchronous manner and operate in a multi instruction multi data stream (MIMD) manner, and said second scalar processor (201) is able to access said working memory (202) of said second scalar processor (201), memory means for holding an operated result of said plurality of functional blocks, and said working memory (202) of said first scalar processor (201) as the same memory space.

26. An information processing system as claimed in claim 25, wherein said first scalar processor (201) contains a local processor and said second scalar processor (201) contains a global processor.

27. An information processing system as claimed in claim 25, wherein said plurality of functional blocks included in said information processing apparatus are integrated on a single integrated circuit substrate (601).

28. An information processing system as claimed in claim 27, wherein said information processing apparatuses serve to compute the same or respective neural network models.

29. An information processing system as claimed in claim 28, wherein said neural network model is an interconnecting neural network.

30. A workstation being arranged of an information processing apparatus, said information processing apparatus comprising:

a plurality of functional blocks having an operating unit (423) and a memory for holding information;

a data bus (400) for connecting said plurality of functional blocks with each other;

a working memory (202) for storing an operation instruction for at least said plurality of functional blocks; and

an instruction bus (470) for outputting said operation instruction to said plurality of functional blocks;

said plurality of functional blocks, said data bus (400), said working memory (202) and said instruction bus (470) being integrated on a first integrated circuit substrate (601);

a scalar processor (201) for controlling generation of an operation instruction to said plurality of functional blocks, said scalar processor (201) being integrated on a second integrated circuit substrate (602);

an I/O processor (1101) for taking an interface with an external I/O unit of said information processing apparatus, said I/O processor (1101) being integrated on a third integrated circuit substrate; and

said second and third integrated circuit substrates being mounted on said first integrated circuit substrate for composing a single module.

31. A workstation as claimed in claim 30, wherein said scalar processor (201) is able to access said working memory (202) and a memory for holding information of said plurality of functional blocks as the same memory space.

32. A robot control system comprising:

an information processing apparatus having a plurality of functional blocks for processing visual information, said functional blocks being operated in a single instruction multi data stream (SIMD) manner according to a single instruction set;

another information processing apparatus having a plurality of functional blocks for processing visual information and being operated in a single instruction multi data stream (SIMD) manner according to a single instruction set; and

said two type of information processing apparatuses serving to communicate with each other in an asynchronous manner and operate in a multi instruction multi data stream (MIMD) manner.

33. A moving image processing system comprising:

a plurality of information processing apparatuses, each apparatus having a plurality of functional blocks for processing picture information of one frame of a moving image and being operated in a single instruction multi data stream (SIMD) manner according to a single instruction set,

wherein said plurality of information processing apparatuses serve to communicate with each other in an asynchronous manner and operate in a multi instruction multi data stream (MIMD) manner for processing a moving image between a plurality of frames.

# FIG.1

# FIG.2

# FIG.3

401 MODULE INTERNAL INPUT BUS

402 MODULE INTERNAL OUTPUT BUS

204 NEURON PROCESSOR

TRI-STATE BUFFER 428

SELECTOR 455

425 REGISTER FILE

426 REGISTER FILE

427 WEIGHTING VALUE MEMORY

421 WORKING REGISTER

454 SELECTOR

403 A BUS
404 B BUS

SELECTOR 451

SELECTOR 452

423 ALU

Cin

422 MULTIPLIER

ALU FLAG

411 FF

453 SELECTOR

412 FF    413 FF

424 SHIFTER

405 C BUS

465 INSTRUCTION DECODER

460  | A BUS | B BUS | ALU INSTRUCTION | ............ |

470 INSTRUCTION BUS

# FIG.4

140 FROM MODULE INPUT BUS

ADDRESS

| 0 | OUTPUT OF NEURON[0] |
| 1 | OUTPUT OF NEURON[1] |
| 2 | OUTPUT OF NEURON[2] |
| 3 | OUTPUT OF NEURON[3] |

503 +1

502 WRITE ADDRESS POINTER

FROM 140

504

401 TO MODULE INTERNAL INPUT BUS

501

330 COMMUNICATION UNIT

505 READING ADDRESS (FROM INSTRUCTION BUS 470)

EP 0 557 997 A2

# FIG.5

201 LOCAL PROCESSOR

460 NEURON INSTRUCTION

204 NEURON PROCESSOR

550 ADDRESS CONVERTING CIRCUIT

552 MEMORY SPACE

551 MEMORY POINTER

| PROGRAM AREA FOR LOCAL PROCESSOR |
| WORKING AREA FOR OPERATING SCALAR |
| TEACHER SIGNAL |
| NEURON INSTRUCTION |

202 WORKING MEMORY

OUTPUT OF NEURON

425,426 REGISTER FILE

WEIGHTING VALUE OF NEURON

427 WEIGHTING VALUE MEMORY

# FIG.6

402 MODULE INPUT OUTPUT BUS

204

N
NEURON
PROCES-
SOR

204

N

204

N

201

LOCAL
PROCESSOR

401 MODULE INTERNAL
INPUT BUS

470 INSTRUCTION BUS
(NEURON INSTRUCTION 460)

EP 0 557 997 A2

# FIG.7

| | |
|---|---|
| **141** GLOBAL PROCESSOR | |

**562 MEMORY SPACE**

| | |
|---|---|
| **142** GLOBAL MEMORY | |

| | | |
|---|---|---|
| **202** WORKING MEMORY | | FIRST MODULE |
| OUTPUT OF NEURON | 425,426 REGISTER FILE | |
| | 427 WEIGHTING VALUE MEMORY | |
| **202** WORKING MEMORY | | SECOND MODULE |
| OUTPUT OF NEURON | 425,426 REGISTER FILE | |
| WEIGHTING VALUE OF NEWRON | 427 WEIGHTING VALUE MEMORY | |
| ⋮ | ⋮ | |
| **202** WORKING MEMORY | | 128th MODULE |
| OUTPUT OF NEURON | 425,426 REGISTER FILE | |
| WEIGHTING VALUE OF NEWRON | 427 WEIGHTING VALUE MEMORY | |

20

# FIG.8

1 MODULE

400 MODULE INTERNAL BUS

N N N
200
330
COMMUNICATION UNIT

N N N
330

SYNCHRONOUS

2 MODULE

400 MODULE INTERNAL BUS

N N N
330

N N N
330

SYNCHRONOUS

3 MODULE

400 MODULE INTERNAL BUS

N N N
330

N N N
330

SYNCHRONOUS

4 MODULE

400 MODULE INTERNAL BUS

N N N
330

N N N
330

SYNCHRONOUS

130 INTER-MODULE BUS
ASYNCHRONOUS

# FIG.9

200 MODULE

# FIG.10

402 MODULE INTERNAL OUTPUT BUS

```
411   425        204          411   425        204

422   422                     422   422

      427                           427
```

201

LOCAL PROCESSOR

401 MODULE INTERNAL INPUT BUS

470 INSTRUCTION BUS
(NEURON INSTRUCTION 460)

# FIG.11

```
X11                    X21

X12              X22
```

1 MODULE            2 MODULE

# FIG.12

# FIG.13

# FIG.14

141 — GLOBAL PROCESSOR SYNCHRONIZING PROCESS SAFETY FUNCTION

GLOBAL MEMORY — 142

1 — MODULE | IMAGE PROCESSING

VOICE PROCESSING | 2 MODULE

3 — MODULE | STORAGE OF IMAGE PATTERN

STORAGE OF VOICE PATTERN | 4 MODULE

125 MODULE | STORAGE OF MOVING PATTERN

EVALUATION OF MOVEMENT | 126 MODULE

127 — MODULE | OCCURRENCE OF MOVING PATTERN

CONTROL OF ACTION | 128 MODULE

130 INTER-MODULE BUS

26

# FIG.15

# FIG.16

# FIG.17

# FIG.18

# FIG.19

601

# FIG.20

1200

WORK STATION

~10cm

1100

204

RISK PROCESSOR

(Si ON Si)

| N | N | N | ...... | N | CU |
| N | N | N | ...... | N | CU |
| N | N | N | ...... | N | CU |
| N | N | N | ...... | N | CU |
| N | N | N | ...... | N | CU |

WORKING MEMORY

202

~10cm

| I/O PROCESSOR (Si ON Si) | DISK CONTROLLER (Si ON Si) | GRAPHIC CONTROLLER (Si ON Si) |

1101

1102

1103

601 LARGE INTEGRATED CIRCUIT

# FIG.21

EP 0 557 997 A2

# FIG.22